# EUROPEAN PATENT APPLICATION

(11) **EP 3 135 966 A1**
(43) Date of publication of application: **01.03.2017**
(21) Application number: 15183190.6
(22) Date of filing: 31.08.2015
(51) Int. Cl.: F16K 11/085, F16K 11/074, F16K 37/00, B01L 3/00, G01N 35/10, G01N 1/14

(54) **ROTARY VALVE**

(71) Applicant: bNovate Technologies SA, 1003 Lausanne (CH)
(72) Inventor: KUENZI, Simon, 1003 Lausanne (CH)
(74) Representative: reuteler & cie SA

(57) **Abstract**

Rotary valve (8) including a position sensing system (24), a stator (18) comprising a stator body (32) and a plurality of stator fluid channels (34) connected to fluid ports (56) coupled to respective fluid supply and delivery lines, and a rotor (20) comprising a rotor body (36) and at least one rotor fluid channel (38). The stator body comprises a valve bearing surface (50) and the rotor body (36) comprises a complementary valve bearing surface slidably engaging the stator valve bearing surface, the rotor fluid channel (38) configured to be brought into fluid communication with stator fluid channels (34) as a function of the relative angular position of the rotor with respect of the stator about a rotor axis A. Each said stator fluid channel comprises an end (64, 66) at said stator body valve bearing surface. The position sensing system comprises a position detector (42) mounted in the stator and complementary sensor position markers (46) mounted in the rotor configured to provide a plurality of discrete detectable positions spaced around the rotor at angular spacings that correspond to angular spacings between the ends of the stator fluid channels that are positioned at the stator valve bearing surface.

## Description

The present invention relates to a rotary valve with selectable positions for input and output of fluids.

Rotary valves may be used with piston or syringe pump systems that are used to draw in a liquid in a pump chamber from a liquid supply and subsequently expel the liquid through an outlet. In such systems, there may be a plurality of inlets connected to a plurality of liquid supplies comprising different liquids, for delivery to one or more outlets that feed into one or more delivery systems. Various applications may benefit from such sequential delivery of different liquids depending on the processes to be accomplished, for instance in biological or medical diagnostics applications. In such applications, it is common to use syringe pumps for accurate dosage. Other microfluidic applications also benefit from pump with selectable rotary valve arrangements.

One of the drawbacks in conventional syringe pump arrangements for microfluidic liquid delivery is the loss of liquid to waste when changing liquids due to the need to wash through the residual volume of liquid in the inlets and outlets within the pump and valve. A further drawback of conventional systems is the difficulty of removing all air within the pump and valve that may be trapped in dead volume zones within the pump and valve. Certain types of pumps, such as peristaltic pumps do not suffer from these drawbacks, however are not well adapted or convenient for accurate pumping, in particular microfluidic pumping and moreover are not well adapted for valve systems with selectable input and output channels.

In view of the foregoing, it is an object of this invention to provide a rotary valve for a pump system that allows accurate delivery of liquids and minimal waste.

It is advantageous to provide a rotary valve that allows to effectively evacuate air within the valve and a pump system in a reliable manner.

It is advantageous to provide a rotary valve that is cost effective and easy to operate.

It is advantageous to provide a rotary valve that is compact, robust and reliable.

It is advantageous to provide a rotary valve that is cost effective to manufacture and assemble.

It is advantageous to provide a rotary valve that is easy to use.

Objects of the invention have been achieved by providing a rotary valve according to claim 1.

Disclosed herein is a rotary valve including a position sensing system, a stator comprising a stator body and a plurality of stator fluid channels connected to fluid ports coupled to respective fluid supply and delivery lines, and a rotor comprising a rotor body and at least one rotor fluid channel. The stator body comprises a valve bearing surface and the rotor body comprises a complementary valve bearing surface slidably engaging the stator valve bearing surface. The rotor fluid channel is configured to be brought into fluid communication with stator fluid channels as a function of the relative angular position of the rotor with respect of the stator about a rotor axis. Each said stator fluid channel comprises an end at said stator body valve bearing surface. The position sensing system comprises a position detector mounted in the stator and complementary sensor position markers mounted in the rotor configured to provide a plurality of discrete detectable positions spaced around the rotor at angular spacings that correspond to angular spacings between the ends of the stator fluid channels that are positioned at the stator valve bearing surface.

In an advantageous embodiment, the discrete detectable positions are provided by discrete sensor position markers mounted around a circumference of the rotor.

In an advantageous embodiment, the discrete sensor position markers may be mounted in a disc portion of the rotor.

In an advantageous embodiment, at least one of the sensor position markers is configured to provide a signal that is different from the signals produced by the other sensor position markers when detected by the detector to enable determining the absolute position of the rotor from at least one reference position.

In an advantageous embodiment, the sensor position markers comprise discrete magnets mounted on or in the rotor at said angularly spaced positions corresponding to the stator fluid channel ends on the stator valve bearing surface.

In an advantageous embodiment, the sensor position markers may be axially aligned with said stator fluid channel ends on the stator valve bearing surface.

In an advantageous embodiment, the detector comprises a magnetic field sensor.

In an advantageous embodiment, the detector comprises a pair of magnetic field sensors mounted at slightly spaced apart positions configured to enable both the direction of rotation of the rotor as well as the relative angle of the rotor with respect to the stator to be detected accurately.

In an advantageous embodiment, the magnetic field sensor is a Hall effect sensor.

In an advantageous embodiment, sensing surfaces of the pair of sensors are arranged in the stator axially above or below the rotor position markers at a small airgap with respect to the rotor such that the direction of rotation of the rotor as well as the relative angle of the rotor with respect to the stator can be detected accurately.

In an advantageous embodiment, the position marker magnets has a magnetic orientation of opposed polarity to the polarity of the other magnets such that it forms the signal for a reference position.

Also disclosed herein is a pump system comprising a pump and a rotary valve as described above, wherein the rotor fluid channels comprise at least one rotor input fluid channel having an input end at said bearing surface of the rotor and an output end in fluid communication with a pump chamber of the pump, and at least one rotor output fluid channel distinct from the rotor input fluid channel and having an input end in fluid communication with said pump chamber and an output end at said valve bearing surface of the rotor body. The rotor input fluid channel is configured for fluid communication with at least a first of said stator fluid channels at a first relative angular position of the rotor with respect to the stator, and the rotor output fluid channel is configured for fluid communication with at least a second of said stator fluid channels at a second relative angular position of the rotor with respect to the stator, the second relative angular position being different from the first relative angular position.

In a first embodiment, the stator has a conical or cylindrical valve bearing surface and the rotor has a complementary conical or cylindrical valve bearing surface.

In a second embodiment, the rotor valve bearing surface and stator valve bearing surface form a thrust bearing. In this embodiment, the rotor fluid channels may comprise grooves on the rotor bearing surface.

In an advantageous embodiment, the output end of the rotor input fluid channel and the input end of the rotor output fluid channel are at an axial end face of the rotor that bounds or is positioned proximate the pump chamber.

In an advantageous embodiment, the end face of the rotor bounds an end of the pump chamber. In another embodiment, the end face of the rotor is separated from the pump chamber by a stator wall portion.

In an advantageous embodiment, the distinct and separate rotor input fluid channel and rotor output fluid channel extend to the pump chamber end face of the rotor.

In an advantageous embodiment, the stator comprises fluid ports mounted on the stator body for connection to fluid supply lines or fluid delivery lines that may include a fluid waste line.

In an advantageous embodiment, the fluid ports are arranged in a distributed spaced apart manner around the stator body configured for feeding liquid into respective stator fluid channels in the stator body.

In an embodiment, at least one stator fluid channel is at a different axial height to at least one other stator fluid channel.

In an embodiment, the positions of the input and output ends of the various stator and rotor fluid channels are configured such that each rotor fluid channel is in communication with only one stator fluid channel over a 360° rotation of the rotor.

In an advantageous embodiment, the one or more of the fluid channels of the rotor are, over a 360° rotation of the rotor relative to the stator, in fluid communication with two or more stator fluid channels.

Further objects and advantageous features of the invention will be apparent from the claims, from the detailed description, and annexed drawings, in which:

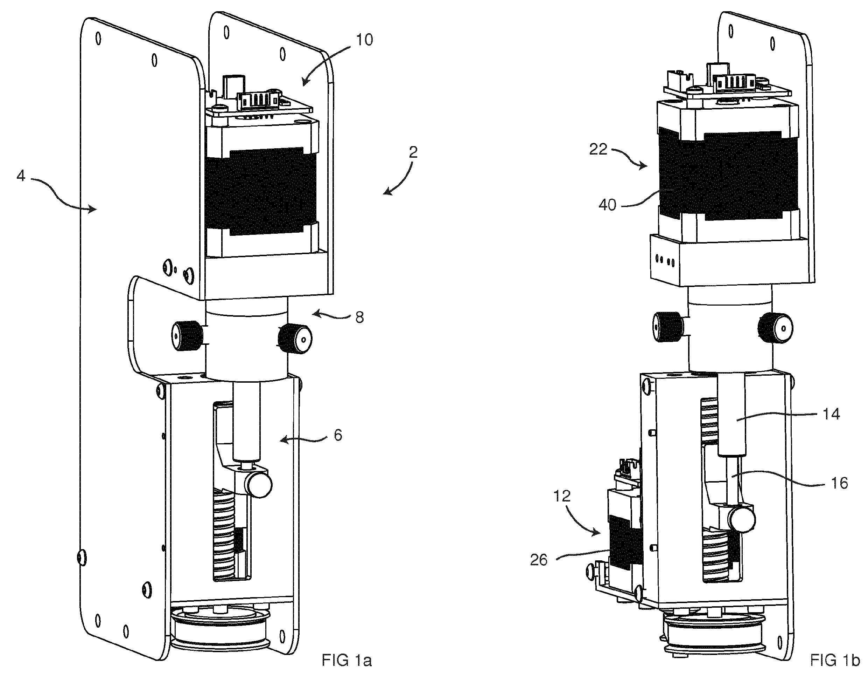

Figure 1a is a perspective view of a pump system with rotary valve according to an embodiment of the invention;
Figure 1b is a perspective view of the pump system with rotary valve of figure 1a with portion of support structure removed;
Figure 2a is a top view of a valve system in a first selected position according to an embodiment of the invention;
Figure 2b is a cross-sectional view through line R-R and figure 2c a cross-sectional view through line O-O of figure 2a;
Figure 3a is a top view of a valve system in a second selected position according to an embodiment of the invention;
Figure 3b is a cross-sectional view through line J-J and figure 2c a cross-sectional view through line L-L of figure 3a;
Figure 4a is a top view of a valve system in a third selected position according to an embodiment of the invention;
Figure 4b is a cross-sectional view through line E-E and figure 4c a cross-sectional view through line N-N of figure 4a;
Figure 5 is an exploded perspective view of a valve system according to an embodiment of the invention;
Figure 6 is a cross-sectional perspective view of a valve system according to an embodiment of the invention;
Figure 7a is a top view of a valve system with the valve in a first position according to an embodiment of the invention;
Figure 7b is a cross-sectional view through line F-F of figure 7a;
Figure 7c is a side view of the valve system of figure 7a;
Figure 7d is a perspective cross-sectional view of the valve system of figure 7a;
Figure 8a is a top view of the valve system of Figure 7a with the valve in second position;
Figure 8b is a cross-sectional view through line I-I of figure 8a;
Figure 9 is a perspective cross-sectional view of a valve system according to another embodiment of the invention;
Figure 10 is a perspective cross-sectional view of a valve system according to another embodiment of the invention;
Figure 11 a is a top view of a valve system according to an embodiment of the invention;
Figure 11b is a perspective cross-sectional view of the valve system of figure 11 a;
Figure 11c is a side view of a valve system according to an embodiment of the invention;
Figure 12a is a top view of a valve system according to an embodiment of the invention;
Figure 12b is a perspective cross-sectional view of the valve system of figure 12a;
Figure 13 is a graph representing the signals of a position sensor comprising magnets and a Hall Effect sensor of a valve system according to an embodiment of the invention.

Referring to the figures, a pump system with rotary valve 2 according to an exemplary embodiment of the invention comprises a housing or support structure 4, a pump 6, a rotary valve 8, and an electronic control system 10. In the illustrated embodiment, the pump 6 is in the form of a syringe or piston pump, however within the scope of this invention other pumps could be employed such as a diaphragm pump or a rotary pump or any other type of pump that allows to draw in liquid from an inlet of the valve and subsequently expel liquid through an outlet of the valve. Within the scope of the invention any pump with a variable volume pump chamber that allows to store liquid between the drawing in phase and subsequent expulsion phase can be employed depending on the application. The piston type of pump or syringe pump is advantageous in microfluidic applications in view of the accurate control in the amount of liquid that is pumped.

The valve 8 comprises a stator 18, a rotor 20, an actuator 22 coupled to the rotor and a position sensing system 24 configured to measure the rotary position of the rotor relative to the stator. The actuator 22 may be an electrical actuator of various types, for instance a rotary motor 40 with a rotor having an output access coupled directly or through a gear train or other type of transmission to the rotor in order to turn the rotor in different positions. In an advantageous embodiment, the motor 40 of the actuator 22 may be a stepping motor, although other types of electrical motors could also be employed.

It may be noted that in the present invention, the term "rotor" and "stator" designate parts that are relatively rotatable with respect to each other, whereby:
- the rotor may have a fixed position with respect to a reference body (e.g. on which a device incorporating the valve is fixed), and the stator is rotatable with respect to a reference body and the rotor, or
- both the rotor and stator are rotatable with respect to a reference body and with respect to each other, or
- the stator has a fixed position with respect to a reference body and the rotor is rotatable with respect to the reference body and the stator.

In an embodiment where the stator rotates and the rotor is fixed relative to the reference body, the actuator may be coupled to the stator. In an embodiment where the rotor and stator both rotate relative to the reference body and to each other, actuators can engage both rotor and stator, or one actuator can be provided that couples to the rotor or to the stator if the stator and rotor are coupled together via a transmission.

In the illustrated embodiment, the pump 6 is a syringe or piston pump comprising a pump body 14 enclosing a pump chamber 28 and a movable pump actuated element 16, in present example comprising a pump piston 30 in the form a plunger that is displaced linearly in order to increase the volume in the chamber to draw in liquid or to decrease the volume in the chamber to expel a liquid therefrom.

The control system 10 comprises an electronic circuit configured to operate the valve 8, to set the valve and to operate the pump and possibly supply information to and receive inputs from a user or other electronic control systems for operation of the system. The control system may be distributed within devices of the overall system, or form a centralized unit. The general design and configuration of control systems for motors and valves are *per se* known and shall not be described in detail in the present disclosure.

In an aspect of the invention, the control system is configured to receive and process signals from a position sensing system 24 of the valve 8 in order to determine the angular position of the valve and to control the actuator 22 that drives the rotation of the rotor 20 of the valve.

The stator 18 of the valve 8 comprises a stator body 32 in which stator fluid channels 34 are formed, the stator body comprising a bearing surface 50 that bears against a bearing surface 70 of the rotor 20. The stator 18 further comprises fluid ports 56 mounted on the stator body 32 for connection to fluid supply lines 58 or fluid delivery lines 60 that may include a fluid waste line. The fluid ports 56 may be arranged in a distributed manner around the stator body 32, for instance as shown in the illustrated embodiment arranged in a spaced apart manner circumferentially around the stator body for feeding liquid into respective stator fluid channels 34 in the stator body 32.

The stator fluid channels 34 comprise at least one stator input fluid channel 52 extending between an input end 62 arranged at one of said fluid ports 56, to an output end 64 positioned at the bearing surface 50. The stator fluid channels 34 further comprise at least one stator output fluid channel 54 comprising an input end 66 positioned at the bearing surface 50 and extending to an output end 68 positioned at one of the fluid ports 56 for fluid delivery or fluid waste 56. The stator fluid channels may however comprise a plurality of stator input fluid channels connected to different fluid ports for a plurality of fluid supply lines 58. The stator fluid channels may also comprise a plurality of stator output fluid channels connected to different fluid ports 60 coupled to a plurality of fluid delivery or fluid waste lines 56. Depending on the position of the valve rotor 20, different inlet liquids may thus be selected and drawn into the pump chamber, and different outlets may be selected for expelling the liquid from the pump chamber depending on the intended operation such as delivery of a liquid to a certain delivery line or washing through of the valve with a liquid sent to a waste line.

The rotor 20 comprises a rotor body 36 having an outer bearing surface 70 mounted and slidably movable against the inner bearing surface 50 of the stator 18. In the illustrated embodiment, the stator may have a conical or cylindrical inner bearing surface 50 whereas the rotor has a complementary conical or cylindrical outer bearing surface 70 in a snug sliding fit therebetween.

The rotor 20 further comprises at least one rotor fluid channel 38 in the rotor body 36.

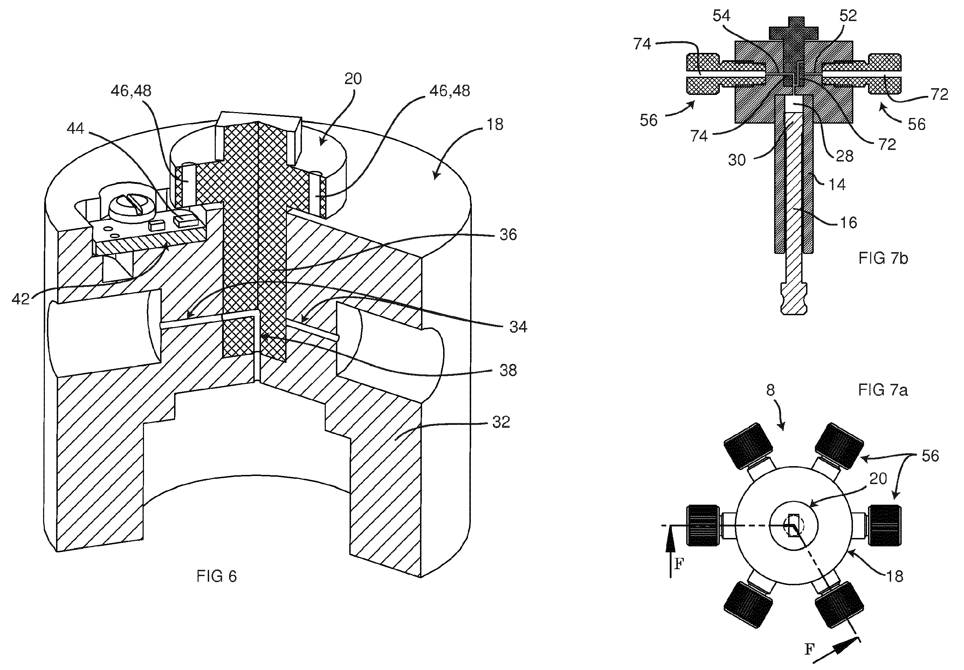

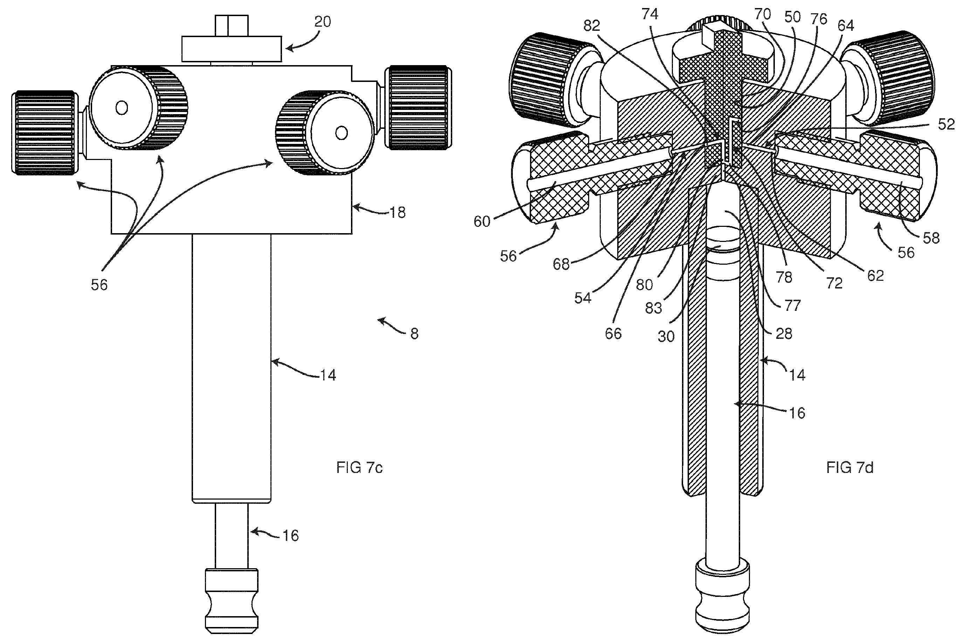

According to an aspect of the invention illustrated in figures 7b, 7d, 8b, 9, 10, 11a-12b), the rotor 20 comprises at least two rotor fluid channels 38 comprising:
- a rotor input fluid channel 72 extending between an input end 76 at the outer bearing surface 70 to an output end 78 positioned at or proximate a pump chamber side 79 of the rotor; and
- a rotor output fluid channel 74 extending between an input end 80 positioned at or proximate the pump chamber side of the rotor 79 to an output end 82 positioned at the outer bearing surface 70 of the rotor body 36.

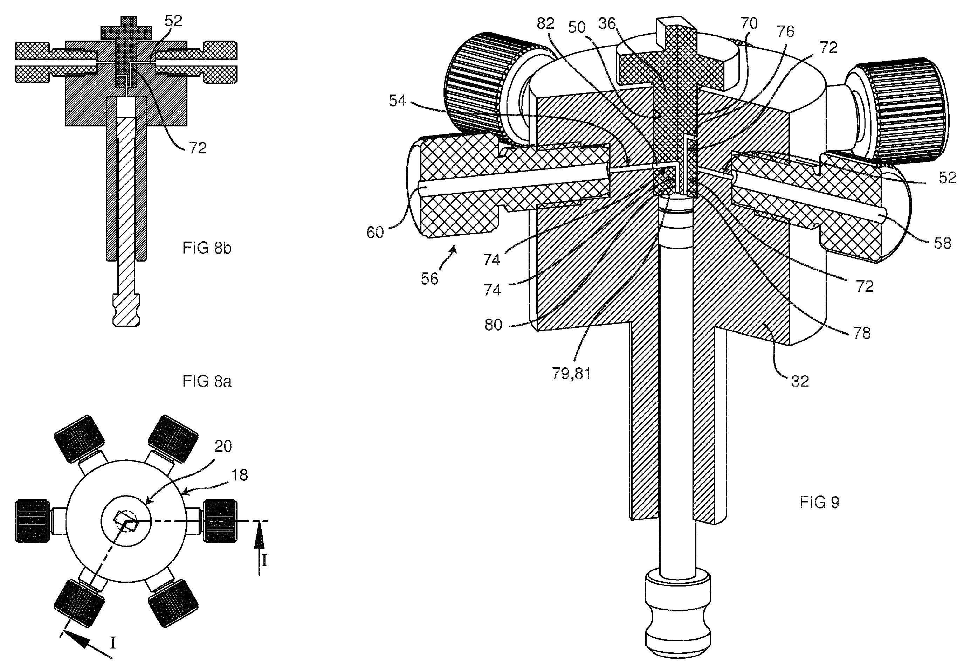

The input end 76 of the rotor input fluid channel 72 and the output end 82 of the rotor output fluid channel 74 are configured to be aligned with an output end 54 of the stator input fluid channel 52 respectively an output end 66 of a stator output fluid channel 50 at a respective specific angular position of the rotor relative to the stator. The rotor can thus be turned to a specific angle such that the stator input fluid channel 52 is in fluid communication with the rotor input fluid channel 72, as illustrated in figures 8a, 8b, and at another specific angular position the stator output fluid channel 54 is in fluid communication with the rotor output fluid channel 74 as illustrated in figures 7a, 7b, 7d.

The positions of the input and output ends of the various channels may be configured such that each rotor fluid channel 38 is in communication with only one stator fluid channel 34 over a 360° rotation of the rotor 20. Alternatively one or more of the fluid channels of the rotor could each, over a 360° rotation of the rotor relative to the stator, be in fluid communication with two or more stator fluid channels. The latter configuration may allow, for instance,
- a specific liquid drawn in to the pump chamber to be distributed to one of a plurality of fluid ports depending on the selected angle of the rotor relative to the stator, and/or
- to selectively connect the pump chamber to a selected one of a plurality of fluid ports 56 for supply of a selected one of a plurality of different supply liquids depending on the selected position of the rotor relative to the stator.

In the embodiments illustrated in figures 8a, 8b, 7a, 7b, 7d, 9, 10, 11a-12b there is one rotor input fluid channel 72 and one rotor output fluid channel 74, however in variants it is possible to have a plurality of rotor input fluid channels 72 and/or a plurality of rotor output fluid channels 74.

It may be noted that in the above described description, the term "input fluid channel" and "output fluid channel" are simply to designate the channels which are connected to fluid supply and those connected to fluid delivery, however the illustrated pump system is reversible and a supply line could be a delivery line and a delivery line could be a supply line. Moreover, the system according to the invention can be used for drawing in and expelling liquid and then drawing in the expelled liquid, for instance in a closed circuit application, or for various selected orders of drawing and expelling liquid from various lines connected to the fluid ports on the stator body.

Advantageously, the output end 78 of the rotor input fluid channel 72 exits at the pump chamber end face 79 of the rotor that is positioned close to or bounding the pump chamber 28. Similarly the input end 80 of the rotor output fluid channel 74 is positioned at the pump chamber end face 79 of the rotor which bounds or is positioned close to the pump chamber 28.

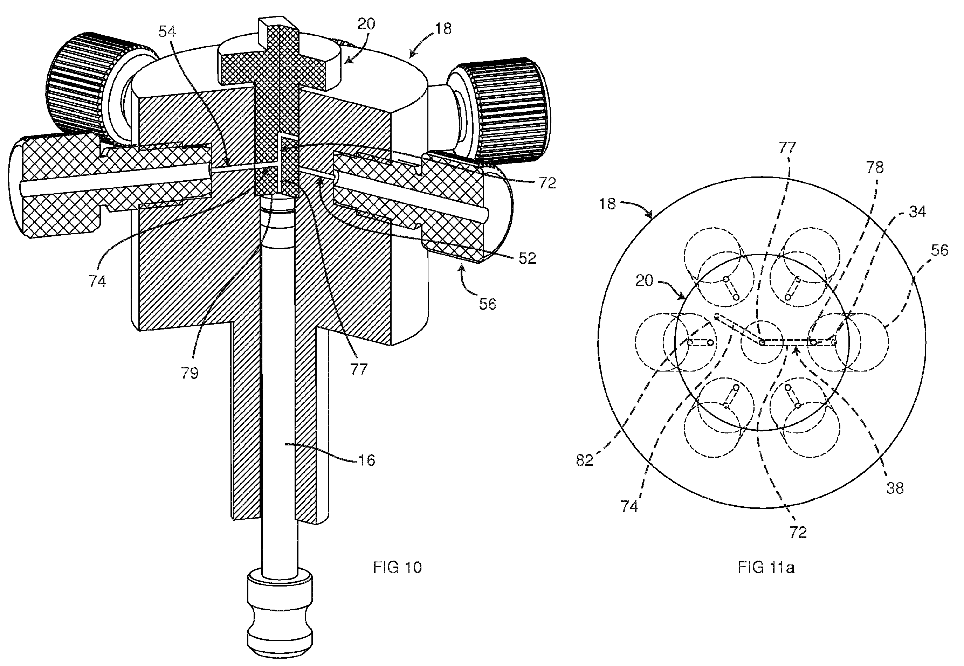

As mentioned previously, according to an aspect of the invention, the rotor input fluid channel and output fluid channel are distinct and separate channels such that the dead volume of fluid in the channels during operation of the drawing in liquid and expelling liquid is nil or very small and essentially limited to the volume of the liquid in the common section 77 of the input and output channels leading to the pump chamber 28 as illustrated in the embodiments of figures 7d and 10. The volume of liquid in the common section 77 serves both for the drawing in of liquid as well as the expelling and thus forms a section of channel storing residual liquid that cannot be entirely drawn through the valve in a continuous direction flow. This "residual volume" should be as small as possible to improve washing and reduce waste and contamination when switching from one liquid to another. In the invention this is achieved by providing at least one rotor input fluid channel distinct and from at least one rotor output fluid channel, with a very short common section connecting the channels to the pump chamber 28. In the embodiment illustrated in figures 7b and 7d a separating wall portion 83 of the stator 18 separates the rotor 20 from the pump chamber 28, the common section being formed through the separating wall portion 83 in order to connect the pump chamber 28 to the rotor 20.

In another embodiment as illustrated in figure 9, both the distinct and separate rotor input fluid channel 72 and rotor output fluid channel 74 extend to the pump chamber end face 79 of the rotor, without a stator separating wall portion, and therefore without a common section. In this embodiment the pump chamber end face 79 of the rotor directly bounds the upper end of the pump chamber 28. The residual volume when the pump piston 30 is positioned against or essentially against the face 81 of the pump chamber 28, which in this embodiment is formed at least partially by the rotor end face 79, can be zero or essentially zero. This advantageously also allows avoiding trapping air within the chamber by enabling to purge entirely the rotor pump chamber 28 in a continuous direction flow through of liquid in the channels.

An important advantage of the invention is that the distinct rotor input and output fluid channels allow an essentially continuous flow through system when switching from inputting liquid to outputting liquid thereby allowing to purge through the fluid channels without leaving any residual waste as well as ensuring that the lost amount during a purging operation requires at a minimum purging only the fluid channels which may have a very small volume thereby reducing waste.

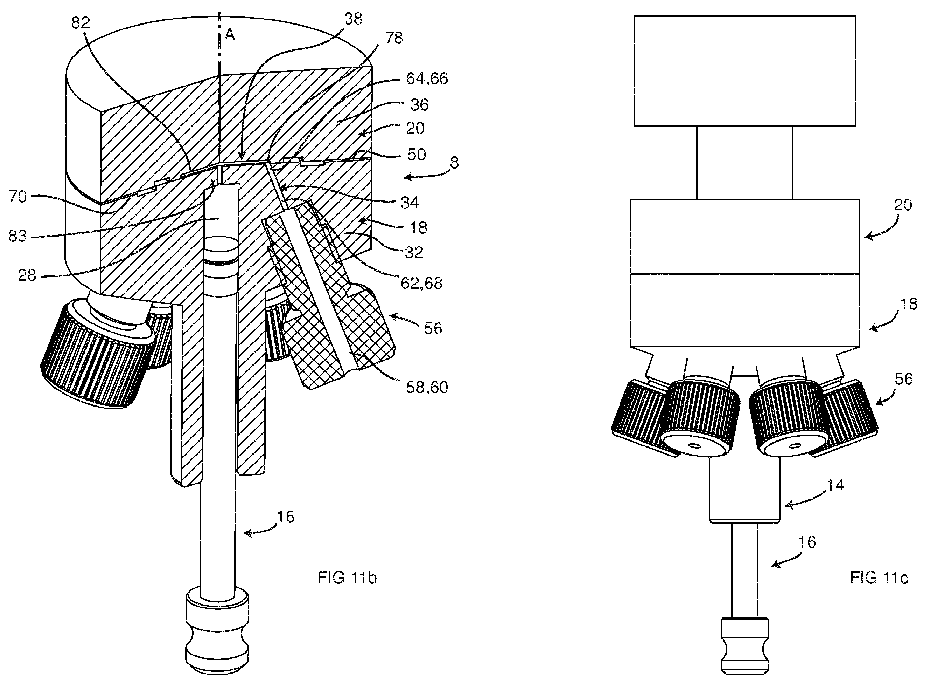

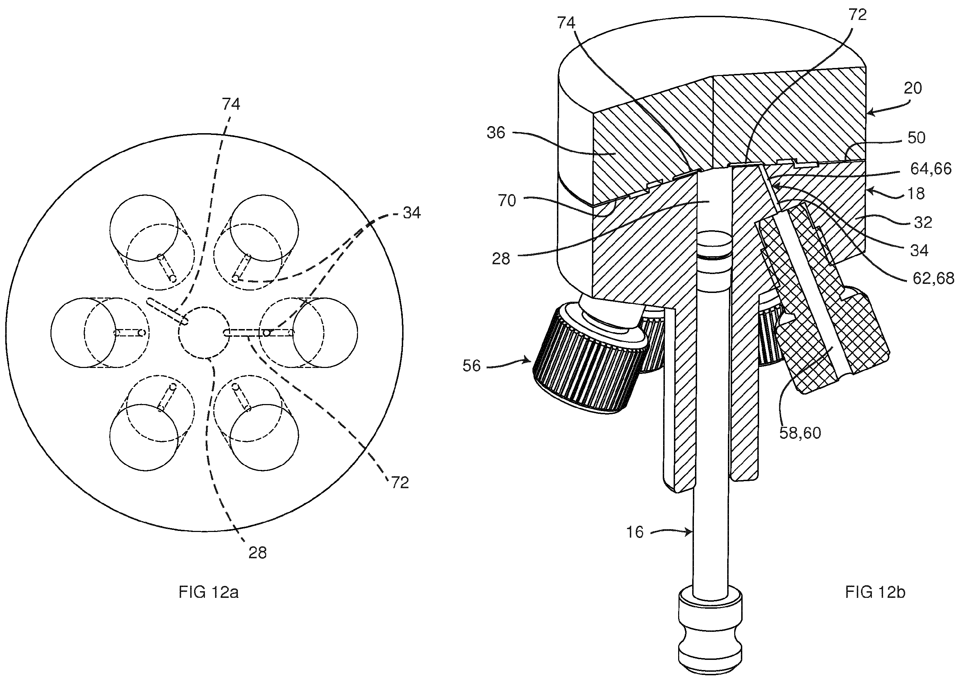

In the embodiments illustrated in figures 11a, 11b and 12a, 12b, the rotor pump chamber end face 79 forms the rotor valve bearing surface 70 slidably bearing against an axial end face of the stator 18 that forms the stator valve bearing surface 50. The valve bearing surfaces in this embodiment thus form a thrust bearing, whereas in the previously described embodiments the valve bearing surfaces form substantially a journal bearing, that may be cylindrical or conical. The rotor and stator are provided with further means (not shown) to position, guide and hold the rotor to the stator and allow rotation of the rotor 20 about its rotation axis A. The rotor fluid channels 38 comprise grooves on the rotor bearing surface 70 that are configured to fluidically interconnect an end 64, 66 of a stator fluid channel 34, 52, 54 with the pump chamber 28 at a selected specific angle. In the embodiment illustrated in figures 11b, 11c and 12b, the fluid ports 56 are arranged around the stator and project therefrom partially radially and partially axially.

In variants, the fluid ports can however project outwardly from the stator body at different angles, from radially as illustrated for instance in the embodiment of figure 10, to axially (not shown). The stator fluid channels in the various embodiments illustrated are designed as straight channels however in variants it is possible that the stator fluid channels are designed with curved or other non-straight shapes, for instance to configure the position of the inlet and outlet in a non-aligned manner.

In the embodiment of figure 11 a and 11 b, the stator body 32 comprises a separating wall portion 83 separating the pump chamber 28 from the rotor axial end face 79 (that also serves as the valve bearing surface 70). In this variant, there is a common channel section 77 similar to what has already been described in relation to the embodiments of figure 7d and 8b. In this embodiment the rotor fluid channels 38, including the rotor input fluid channel 72 and rotor output fluid channel 74, may comprise a continuous groove spanning across the common channel section so as to be in fluid communication with the pump chamber 28, whereby ends 78, 82 of the rotor fluid channels extend over selected ends of the stator fluid channels 34 that are at the stator valve bearing surface 50 at selected angles of rotation. The rotor 20 can thus be rotated about its axis A relative to the stator 18 to any one of a plurality of selected angles to interconnect fluidically any one of a selected stator fluid channel 34, 52, 54 with the pump chamber 28 for drawing in or expelling liquid from and to the fluid supply and delivery lines 58, 60 as already described above in relation to the other embodiments.

In the embodiment of figures 12a, 12b, the pump chamber 28 is directly bounded at its end by the rotor axial end face 79 (that also serves as the valve bearing surface 70). In this variant, the rotor fluid channels may comprise separate sections forming the rotor input fluid channel 72 and the rotor output fluid channel 74. It may be noted that in this embodiment the rotor fluid channel may however also have a continuous groove including the rotor input fluid channel 72 and rotor output fluid channel 74 similar to the embodiment of figure 11 a. In the embodiment of figures 12a and 12b, there is essentially no residual volume in the sense that the rotor and stator fluid channels interconnect fluidically to allow a through-flow of liquid in only one direction in the channels 34, 38 within the valve thereby allowing to wash through the valve efficiently, with minimal waste and avoidance of trapping air or residual liquids.

The stator ports and corresponding stator fluid channel may be at different axial heights, or in the same plane, whereby in the latter variant, the angles between the rotor channels and stator channels need to be configured in a manner to avoid that having two channels of the rotor connected to two stator channels simultaneously. In a variant, the rotary valve could optionally further comprise a bypass mode whereby in at least one rotary position corresponding to the bypass mode, both rotor channels are connected to respective stator channels simultaneously.

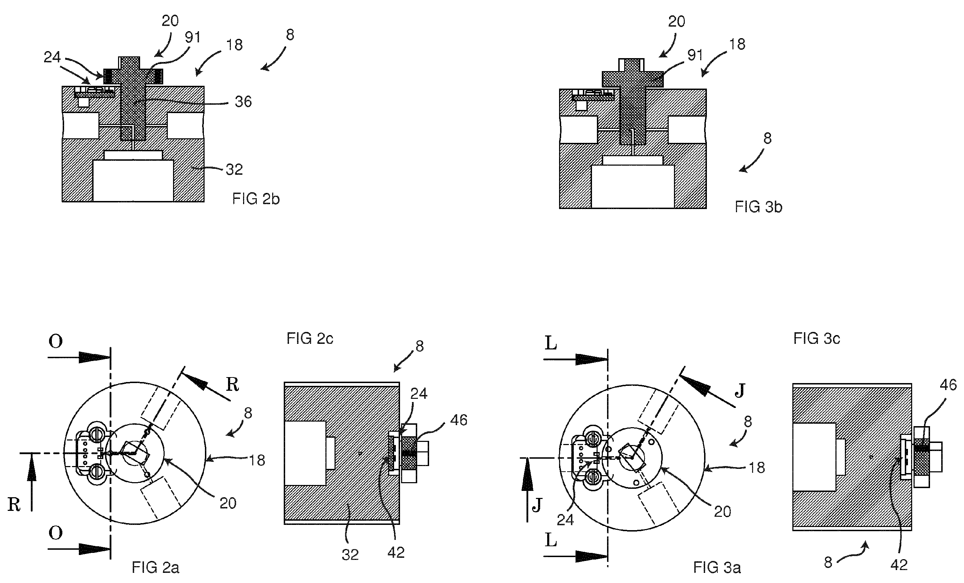

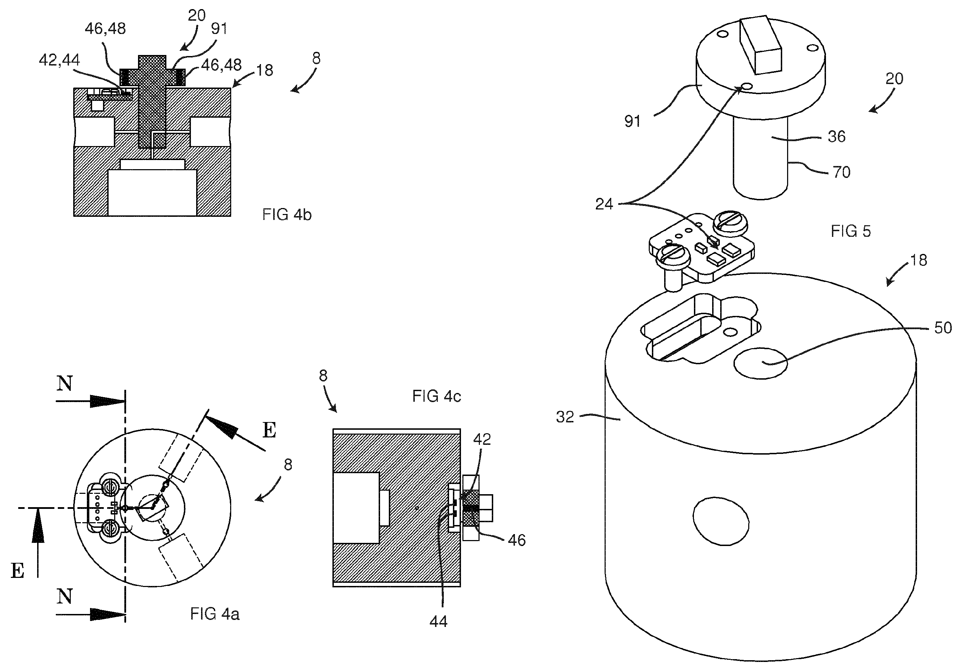

Referring to figures 2a to 6, according to another aspect of the invention, the position sensing system 24 comprises a position detector 42 mounted in the stator and complementary position markers 46 mounted in the rotor 20. The position markers 46 in the rotor are configured to provide a plurality of discrete detectable positions spaced around the rotor 20 at angular spacings that correspond to the angular spacings between the ends 64, 66 of the stator fluid channels 34 that are positioned at the stator valve bearing surface 50. This allows the rotor to be turned to each one of the angular positions corresponding to the ends 64, 66 of the stator fluid channels that are on the bearing surface 50 in order to align the ends of the rotor fluid channels 38 that are positioned at the rotor body outer bearing surface 70 for fluid communication between the rotor fluid channel 38 and stator fluid channel 34.

In an advantageous embodiment, the discrete detectable positions are provided by discrete sensor position markers 46 mounted in the rotor around the circumference of a disc portion 91 of the rotor. One of the position markers may be configured to provide a signal that is different from the signals produced by the other position elements when detected by the detector 42 in order to enable determining the absolute position of the rotor from at least one reference position.

In an advantageous embodiment, the position markers 46 comprise discrete magnets mounted on or in the rotor at said angularly spaced positions corresponding to the stator fluid channel ends on the bearing surface 50, whereby in a preferred embodiment the position markers may be axially aligned with the said stator fluid channel ends 64, 66. It should however be noted that the position markers may also be offset with respect to the channel end whereby this offset is taken into account in the electronic computation of the rotor position. In this embodiment, the detector 42 comprises a magnetic field detector, for instance a Hall sensor, or other *per se* known magnetic field sensor or induction coil sensor that is capable of detecting the passage of the position marker magnet.

In an advantageous embodiment, the magnetic field detector may comprise a pair of magnetic field sensors, for instance a pair of Hall effect sensors, mounted at slightly spaced apart positions. The pair of sensors enables both the direction of rotation of the rotor as well as the relative angle of the rotor with respect to the stator to be detected accurately. The sensing surfaces of pair of sensors may be linearly aligned with respect to each other, or may be positioned at an angle of between 180° and 90° with respect to each other. The magnetic sensing surfaces of the Hall sensors may be arranged in the stator axially above or below the position markers 46 at a small air gap with respect to the rotor disc section 91 carrying the position markers, such that the direction of rotation of the rotor as well as the relative angle of the rotor with respect to the stator can be detected accurately. One of the position element magnets may have a magnetic orientation that is opposed polarity to the other magnets such that it forms the signal for the absolute or reference position element discussed previously.

It may be noted that within the scope of the invention, other discrete position markers and corresponding detector may be provided, for instance the position markers may be made of a material a high magnetic permeability and the detector in such case may comprise an induction element that generates an inductive field that creates a magnetic field within the position markers that may be picked up by the detector. Another variant is to place a static magnetic field close the Hall effect sensor(s) and to use the high magnetic permeability material to vary the strength of the magnetic field being measured. In another variant, the position marker may comprise an electrically conductive material or having a high relative permeability and the detector may be a capacitive element that measures the change in capacitance due to the position of the conductive position marker.

In an advantageous embodiment, the two Hall sensors of the position sensing system 24 monitor the position of the nearest position marker magnet 48 situated in the rotor 20. The Hall sensors 44 may be linear (ratiometric), and can thus accurately sense the position of the position marker magnet. Used in a differential way to compensate for external perturbation, both Hall sensors 44 can accurately detect when the position marker magnet has reached the middle position between the two Hall sensors. The rotation direction can thus also be measured. As the Hall sensors 44 can also sense the magnetic field direction, a zero position is defined with a magnet mounted in the opposite direction, resulting in a reversed magnetic field compared to the other position marker magnets. At initialization of the valve this reference marker position magnet is searched by the sensors in a homing operation and the reference position is set.

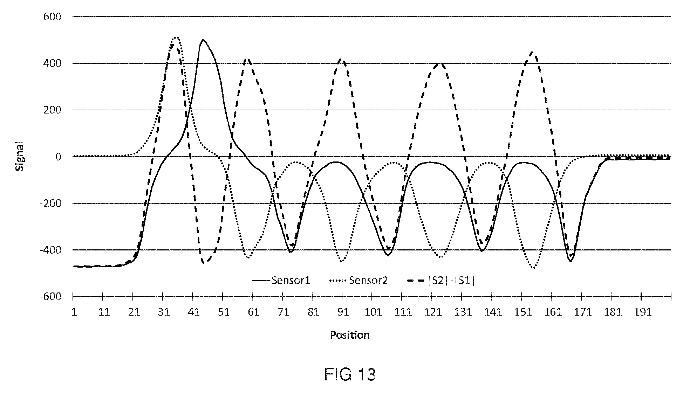

The signals generated by the passage of magnets over the Hall sensors is illustrated in figure 13. In order to detect a position when the rotor relative to the stator aligns a rotor fluid channel with a stator fluid channel, the following criteria met simultaneously can for instance be used:
1. The difference of the signals of both Hall sensors is zero, and
2. The slope of signal composed by the difference of the absolute values of both Hall sensors is negative or positive depending on the rotation direction. This condition enables to distinguish the aligned rotor and stator channel positions from intermediate positions.

A homing procedure may include the above working with the absolute values of both sensors and simultaneously checking the sign of the Hall effect sensor signals. When the reference magnet with inverted polarity is between the pair of Hall effect sensors, both sensors generate a signal with inverted sign compared to the expected signal for a non-reference magnet. Instead of a magnetic or electrical sensing method, the position sensing system 24 may also comprise an optical detector on the stator 18 and the position markers on the rotor 20 may be in the form of optical markings, for instance light absorbing or light reflecting markings positioned on the rotor that are sensed as they pass the optical detector.

Advantageously, the provision of position markers of a position sensing system 24 directly on the rotor 20 of the valve 8 allows to determine the exact position and thus to position the valve rotor accurately with respect to the valve stator. This further allows the stator and rotor fluid channels 34, 38 to have the minimal diameter required for the fluid communication without the need to compensate for misalignment between the rotor and stator as is typical in conventional systems where larger channel openings are required at the bearing surfaces in order to ensure sufficient overlap to avoid excessive fluid resistance in the case of misalignment. In conventional systems, this misalignment is due to the positioning of valve position sensors on the actuator 22 or in the transmission system between the actuator and the valve rotor whereby a certain mechanical play in the transmission system or between the actuator and the rotor is unavoidable, particularly when there is a change of direction of the actuator, but also taking into account thermal dilatation and wear during the lifetime of the pump system and rotary valve.

### Example of applications

### Example of sequence:

1. Pump into pump chamber Liquid A
2. Pump into pump chamber Liquid B (B is thus mixed with A)
3. Pump out Liquid A+B to output port (for measurement)
4. Pump in Cleaning liquid
5. Pump out Cleaning liquid to output port
6. Pump in Rinsing liquid
7. Pump out Pump Rinsing liquid to output port
8. Optionally restart over to 1.

### Example of an automated sample preparation prior to an analysis optical, electrical ...):

Requires a 6-way valve with 2 stages.

*Fluid port configuration:*
1. Sample
2. Reagent
3. Output to measurement cell
4. Cleaning liquid (aggressive)
5. Not used
6. Rinsing liquid

*Comment:* ports 1, 3, 5 are connected to one channel, and ports 2, 4, 6 the second one.

### Example of Sequence:

1. Only if required (at start): Prime pump with all incoming liquids and rinse syringe to output with rinsing liquid,
2. Pump in 200 µl of sample
3. Pump in 20 µl of reagent
4. Mix sample and reagent in pump chamber
5. Pump out the whole mixture to output
6. Pump in 50 µl of cleaning liquid
7. Pump out cleaning liquid to output
8. Pump in 50 µl of rinsing liquid (first dilution of a factor -50)
9. Pump out rinsing liquid to output
10. Pump in 250 µl of rinsing liquid (second dilution of a factor -250, total dilution of a factor ∼ 12'500)
11. Pump out rinsing liquid to output
12. Restart over to point 2.

Advantages of embodiments of the invention relating to the separate rotor fluid channels are discussed below in relation to such applications by way of example.

### High dilution and low cross-contamination:

When rinsing or changing liquid in the pump chamber, a minimum cross-contamination is obtained due to the very low dead-volume. When emptying the pump from Liquid A and refilling it with liquid B, the contamination of Liquid A in Liquid B is of the amount of the dead-volume. The dilution factor is given by the ratio between the dead-volume and the amount of newly pumped liquid (in this case Liquid B).

### High precision dosing of compounded mixes:

When dosing and mixing two or more liquids by filling the pump chamber sequentially, the low dead-volume allows more precise dosing of small quantities. The internal dead-volume of the valve interfere in the dosing precision. For example, after pumping in 50 µl of liquid A, one wants to pump in 50 µl of liquid B, however the internal dead-volume of the rotary valve is still filled with liquid A. If this dead-volume is of about 20 µl, one needs to compensate this volume at each step, which renders this operation very complex, or impossible if the desired quantity is smaller than the dead-volume.

### Effective air purging:

A very small or zero dead-volume allows a straightforward removal of the air when priming the pump. In conventional pumps, a thick air layer (of the volume of the dead-volume) remains in the syringe or sticks to the piston. This volume which cannot be expelled prevents the good accuracy for dispensing and is difficult to flush or dilute.

The advantages of this position sensing system on the valve rotor are:
- One can work with smaller inner channels. Typical channel diameters in conventional valves are around 1 mm, whereas in the present invention smaller diameters can be used. This allows a huge decrease in the dead-volume of the valve. Smaller channels means less internal volume of both passage and dead volumes;
- The quality of the mechanic coupling between the valve rotor and the motor and the aging of the mechanical properties does not affect the valve operation and accuracy;
- The size of the valve motor that is necessary in conventional systems uses a relatively large amount of power because a high torque is necessary to position the rotor with sufficient accuracy. The instruments welcoming these valves thus require an expensive and over-dimensioned power supply compared to the rest of the instrument. With the positioning system according to embodiments of the invention, one can use a low-cost DC motor, with a gearbox, even with a poor mechanical coupling to drive the rotary valve. This also provides the advantage to enable integration of rotary valves into portable devices;
- One can rotate the valve in both directions, thus optimizing the wear of the valve rotor by reducing the traveled distance (this can easily represent a factor of two);
- Greater reliability and confidence in the fact that the fluid port is really connected (always appreciated in automated devices);
- Extremely robust solution: the position sensor system measurement according to certain embodiments may be easily made water and dust proof

### List of references used

```
Pump system with rotary valve 2
       housing / support structure 4
       pump 6
              actuator 12
                      motor 26
              pump body 14
                      pump chamber 28
              pump actuated element 16
                      pump piston 30
       Rotary valve 8
              stator 18
                      stator body 32
                             valve bearing surface 50
                             separating wall portion 83
                      stator fluid channels 34
                             stator input fluid channel 52
                                     input end 62
                                    output end 64
                             stator output fluid channel 54
                                     input end 66
                                    output end 68
                             fluid ports 56
                             fluid supply 58
                             fluid delivery / fluid waste 60
              rotor 20
                      rotor body 36
                             valve bearing surface 70
                             pump chamber end face 79
                             disc portion 91
                      rotor fluid channels 38
                             rotor input fluid channel 72
                                     input end 76
                                    output end 78
                             rotor output fluid channel 74
                                     input end 80
                                    output end 82
                             common section 77
              actuator 22
                      motor 40
                             rotor
                                    output axis
                             stator
              position sensing system 24
                      detector (in stator) 42
                             Hall effect detectors 44
                      position elements (in rotor) 46
                             magnets 48
       control system 10
```

## Claims

1. **Rotary valve (8)** including a position sensing system (24), a stator (18) comprising a stator body (32) and a plurality of stator fluid channels (34) connected to fluid ports (56) coupled to respective fluid supply and delivery lines, and a rotor (20) comprising a rotor body (36) and at least one rotor fluid channel (38), the stator body comprising a valve bearing surface (50) and the rotor body (36) comprising a complementary valve bearing surface slidably engaging the stator valve bearing surface, the rotor fluid channel (38) configured to be brought into fluid communication with stator fluid channels (34) as a function of the relative angular position of the rotor with respect of the stator about a rotor axis A, each said stator fluid channel comprising an end (64, 66) at said stator body valve bearing surface, **characterized in that** the position sensing system comprises a position detector (42) mounted in the stator and complementary sensor position markers (46) mounted in the rotor configured to provide a plurality of discrete detectable positions spaced around the rotor at angular spacings that correspond to angular spacings between the ends of the stator fluid channels that are positioned at the stator valve bearing surface.

2. Rotary valve according to the preceding claim, wherein the discrete detectable positions are provided by discrete sensor position markers (46) mounted around the circumference of the rotor.

3. Rotary valve according to the preceding claim, wherein the discrete sensor position markers (46) are mounted in a disc portion (91) of the rotor.

4. Rotary valve according to any preceding claim, wherein at least one of the sensor position markers is configured to provide a signal that is different from the signals produced by the other sensor position markers when detected by the detector to enable determining the absolute position of the rotor from at least one reference position.

5. Rotary valve according to any preceding claim, wherein the sensor position markers comprise discrete magnets mounted on or in the rotor at said angularly spaced positions corresponding to the stator fluid channel ends on the stator valve bearing surface.

6. Rotary valve according to any preceding claim, wherein the sensor position markers are axially aligned with said stator fluid channel ends on the stator valve bearing surface.

7. Rotary valve according to any preceding claim, wherein the detector comprises a magnetic field sensor.

8. Rotary valve according to the preceding claim, wherein the detector comprises a pair of magnetic field sensors mounted at slightly spaced apart positions configured to enable both the direction of rotation of the rotor as well as the relative angle of the rotor with respect to the stator to be detected accurately.

9. Rotary valve according to either of the two directly preceding claims, wherein the magnetic field sensor is a Hall effect sensor.

10. Rotary valve according to any of the three directly preceding claims, wherein sensing surfaces of the pair of sensors are arranged in the stator axially above or below the rotor position markers at a small air gap with respect to the rotor such that the direction of rotation of the rotor as well as the relative angle of the rotor with respect to the stator can be detected accurately.

11. Rotary valve according to any preceding claim, wherein of the position marker magnets has a magnetic orientation of opposed polarity to the polarity of the other magnets such that it forms the signal for a reference position.

12. **Pump system with rotary valve** comprising a pump (6), and a rotary valve (8) according to any of the preceding claims, wherein the rotor fluid channels (38) comprise at least one rotor input fluid channel (72) having an input end (76) at said bearing surface (70) of the rotor and an output end (78) in fluid communication with a pump chamber (28) of the pump, and at least one rotor output fluid channel (74) distinct from the rotor input fluid channel and having an input end (80) in fluid communication with said pump chamber and an output end (82) at said valve bearing surface (70) of the rotor body (36), the rotor input fluid channel configured for fluid communication with at least a first of said stator fluid channels at a first relative angular position of the rotor with respect to the stator, and the rotor output fluid channel configured for fluid communication with at least a second of said stator fluid channels at a second relative angular position of the rotor with respect to the stator, the second relative angular position being different from the first relative angular position.

13. Pump system with rotary valve according to the preceding claim, wherein the stator has a conical or cylindrical valve bearing surface and the rotor has a complementary conical or cylindrical valve bearing surface.

14. Pump system with rotary valve according to claim 12, wherein rotor valve bearing surface and stator valve bearing surface form a thrust bearing.

15. Pump system with rotary valve according to the preceding claim, wherein the rotor fluid channels comprise grooves on the rotor bearing surface (70).

16. Pump system with rotary valve according to any preceding claim, wherein the output end (78) of the rotor input fluid channel (72) and the input end (80) of the rotor output fluid channel (74) are at an axial end face (79) of the rotor that bounds or is positioned proximate the pump chamber.

17. Pump system with rotary valve according to the preceding claim, wherein the end face (79) of the rotor bounds an end of the pump chamber.

18. Pump system with rotary valve according to the preceding claim, wherein the distinct and separate rotor input fluid channel (72) and rotor output fluid channel (74) extend to the pump chamber end face (79) of the rotor.

19. Pump system with rotary valve according to claim 5, wherein the end face (79) of the rotor is separated from the pump chamber by a stator wall portion (83).

20. Pump system with rotary valve according to any preceding claim, wherein the stator comprises fluid ports (56) mounted on the stator body for connection to fluid supply lines (58) or fluid delivery lines (60) that may include a fluid waste line.

21. Pump system with rotary valve according to the preceding claim, wherein the fluid ports are arranged in a distributed spaced apart manner around the stator body configured for feeding liquid into respective stator fluid channels in the stator body.

22. Pump system with rotary valve according to any preceding claim, wherein at least one stator fluid channel is at a different axial height to at least one other stator fluid channel.

23. Pump system with rotary valve according to any preceding claim, wherein the positions of the input and output ends of the various stator and rotor fluid channels are configured such that each rotor fluid channel is in communication with only one stator fluid channel over a 360° rotation of the rotor.

24. Pump system with rotary valve according to any preceding claim 1-9, wherein one or more of the fluid channels of the rotor are, over a 360° rotation of the rotor relative to the stator, in fluid communication with two or more stator fluid channels.
